# EUROPÄISCHE PATENTSCHRIFT

(11) **EP 2 705 430 B1**
(45) Veröffentlichungstag und Bekanntmachung des Hinweises auf die Patenterteilung: **02.11.2016**
(21) Anmeldenummer: 11799077.0
(22) Anmeldetag: 16.12.2011
(51) Int. Cl.: G06F 11/22

(54) **SYSTEM ZUR DIAGNOSE EINER KOMPONENTE IN EINEM FAHRZEUG**
SYSTEM FOR DIAGNOSING A COMPONENT IN A VEHICLE
SYSTÈME DESTINÉ À RÉALISER UN DIAGNOSTIC PORTANT SUR UN COMPOSANT DANS UN VÉHICULE

(30) Priorität: 30.04.2011 DE 102011100106
(43) Veröffentlichungstag der Anmeldung: 12.03.2014
(73) Patentinhaber: Daimler AG, 70327 Stuttgart (DE)
(72) Erfinder: HAAP, Thomas, 72116 Mössingen (DE); TRAUB, Ralf, 70188 Stuttgart (DE); GRAU, Gerald, 71332 Waiblingen (DE); KREBS, Carsten, 71083 Herrenberg (DE)
(74) Vertreter: JENSEN & SON
(86) Internationale Anmeldenummer: PCT/EP2011/006362
(87) Internationale Veröffentlichungsnummer: WO 2012/149951

(56) Entgegenhaltungen:
- US-A1- 2005 034 029
- US-A1- 2009 199 160

## Beschreibung

Die Erfindung betrifft ein System zur Diagnose einer Komponente in einem Fahrzeug, insbesondere in einem Kraftfahrzeug, sowie ein Verfahren zur Diagnose einer Komponente in einem Fahrzeug.

Moderne Kraftfahrzeuge sind mit einer Velzahl elektronischer Komponenten ausgerüstet. Diese erhöhen den Komfort und die Sicherheit der Insassen und tragen gleichzeitig zur Verringerung der Emissionen und des Kraftstoffverbrauchs bei. Damit steigt jedoch auch die Gefahr von Fehlfunktionen. Um derartige Fehler finden und beheben zu können, werden immer leistungsfähigere elektronische Diagnoseverfahren, mit denen beispielsweise Fehlerzustände im Kraftfahrzeug detektiert werden können, eingesetzt. Es existieren verschiedene herstellerspezifische und -unabhängige Diagnosesysteme. Diese verfügen jeweils über eine Benutzerschnittstelle, die in der Regel in Form eines Bildschirms und einer Tastatur ausgeführt ist. Es sind sowohl kabelgebundene Verbindungen, als auch drahtlose Verbindungen zwischen der Benutzerschnittstelle und dem Kraftfahrzeug-Diagnosesystem bekannt. Die drahtlose Verbindung ermöglicht es, einzelne Parameter des Motors, des Getriebes oder der Zusatzsysteme auch über eine große Entfernung zu kontrollieren, während das Fahrzeug ganz normal gefahren wird.

Moderne Diagnosesysteme sind dazu ausgelegt, sogenannte Skripte, insbesondere XML-Skripte, auszuführen. Neue Skripte werden dabei zum Teil drahtlos, beispielsweise per Mobilfunk an das im Fahrzeug befindliche Diagnosesystem übertragen. Das Gleiche gilt für Änderungen bereits gespeicherter Skripte, also für Updates.

Aus der DE 10 2008 063 276 ist ein Verfahren bekannt, welches einen Austausch von Softwarekomponenten in einem laufenden System ermöglicht, wobei durch eine vorhergehende autonome Verifikation des Systemverhaltens die Zulässigkeit des Updates überprüft wird. Dazu wird eine verteilte Analyse eingesetzt, die mit Hilfe eines lokalen Bewerters das zu erwartende Verhalten untersucht.

Die Übertragung von XML-Skripten hat den Nachteil, dass eine relativ große Datenmenge übertragen werden muss. Dies ist insbesondere bei einer Mobilfunkübertragung nachteilig, da die Übertragung größerer Datenmengen zum einen hohe Kosten verursacht und zum anderen relativ lange dauert.

Aus der US 2009/0199160 A1 sind ein System und ein Verfahren zur Diagnose von Softwarekomponenten bekannt. Zur Diagnose der Komponente wird von einem Test Modul Generator auf Basis von vorgegebenen Parametern und einem vorgegebenen Testplan ein Testmodul generiert. Das Testmodul wird an einen sogenannten "execution host" übertragen und von diesem ausgeführt.

Hiervon ausgehend, liegt der vorliegenden Erfindung die Aufgabe zugrunde, ein System und ein Verfahren zur Diagnose einer Komponente in einem Fahrzeug bereitzustellen, welches zur Ausführung der Diagnose die Übertragung einer geringeren Datenmenge erfordert.

Dieses Problem wird durch ein System mit den Merkmalen des Anspruchs 1 und ein Verfahren mit den Merkmalen des Anspruchs 13 gelöst. Vorteilhafte Ausgestaltungen der Erfindung sind Gegenstand der Unteransprüche.

Vorgeschlagen wird demgemäß ein System zur Diagnose einer Komponente eines Fahrzeugs, wobei das System umfasst: einen Server der dazu eingerichtet und ausgeführt ist, zumindest eine Testsequenz zur Diagnose der Komponente, und zumindest einen der Testsequenz zugeordneten Ausführungsparameter bereit zu stellen, und eine Diagnoseeinrichtung, die dazu eingerichtet und ausgeführt ist, die Testsequenz sowie den Ausführungsparameter zu empfangen, wobei der Server und die Diagnosevorrichtung derart ausgeführt und eingerichtet sind, dass die Testsequenz vom Server an die Diagnoseeinrichtung übertragen und dort vorimplementiert wird, die Übertragung des Ausführungsparameters vom Server an die Diagnoseeinrichtung getrennt und nachfolgend zur Testsequenz erfolgt, und eine Skriptausführungseinheit der Diagnosevorrichtung die Testsequenz entsprechend dem empfangenen Ausführungsparameter ausführt.

Der wesentliche Gedanke der Erfindung besteht darin, ein System zur Diagnose einer Komponente eines Fahrzeugs, insbesondere eines Kraftfahrzeugs zur Verfügung zu stellen, wobei das System vorteilhaft einen Server umfasst, der dazu eingerichtet und vorgesehen ist, zumindest eine plattformunabhängige, außerhalb der Diagnoseeinrichtung ausführbare Testsequenz zur Diagnose der Komponente, und zumindest einen, der Testsequenz zugeordneten Ausführungsparameter zur Verfügung zu stellen, sowie eine Diagnoseeinrichtung, die dazu eingerichtet und vorgesehen ist, die zumindest eine ausführbare Testsequenz sowie den zumindest einen Ausführungsparameter zu empfangen und mit einem Skriptinterpreter oder einem Skriptkompilierer in eine in der Diagnoseeinrichtung und deren Runtime Umgebung ablauffähige bzw. ausführbares Dateiformat bzw, Runtime Skript umzuwandeln. Der Server und die Diagnosevorrichtung sind dabei derart ausgeführt und eingerichtet, dass die Testsequenz an die Diagnoseeinrichtung übertragen und dort vorimplementiert wird, und die Übertragung des Ausführungsparameters vom Server an die Diagnoseeinrichtung getrennt und nachfolgend zur Testsequenz erfolgt.

Die ausführbaren Testsequenzen können als ETX Skripten(Executable Test Sequence Exchange) vorkompiliert werden und eigenen sich dann durch ihre gegenüber den Quelldateien reduzierten Dateigrößen besonders für die Datenübertragung über Telediagnoseverbindungen. Bei Mobilfunkübertragung ist dies ein entscheidender Vorteil.

Die Aufteilung in Testsequenzen und Ausführungsparameter, die Ausführungsparameter von den Testsequenzen für die Übertragung getrennt zu hatten und getrennt übertragbar zu machen, ermöglicht die Testsequenzen in der Diagnoseeinrichtung vorzuimplementieren und die Ausführungsparameter erst bei Bedarf per Telematik, insbesondere per remote Zugriff in die Diagnoseeinrichtung zu übertragen, wo dann der Skriptinterpreter oder Skriptkompilierer aus den Testsequenzen und den Ausführungsparametern das ablauffähige Runtime Skript erzeugt.

Insbesondere wenn die Diagnoseeinrichtung in einer Telematikplatform im Fahrzeug integriert ist, kann hierdurch die über eine Telematikverbindung zu übertragende Datenmenge ganz erheblich reduziert werden. Es müssen lediglich einzelnen Ausführungsparameter wie Zeitpunkte, Triggerereignisse, Gültigkeitsinformationen, Prioritäten usw. übertragen werden. Alternativ kann die Diagnoseeinrichtung auch in ein Mobiles Testgerät implementiert sein, dass in einer Werkstatt zur Fahrzeugdiagnose eingesetzt wird und an das Fahrzeug appliziert werden kann.

Vorzugsweise ist eine Skripterzeugungseinrichtung vorgesehen, welche dazu ausgebildet ist, die Testsequenzen aus einem in einer Skriptsprache, insbesondere in OTX, erstellten Ausgangsskript zu erzeugen. Es kann jedoch auch jede andere Sprache, insbesondere eine XML-Sprache, verwendet werden, welche die Anforderungen an eine Sprache für die Beschreibung einer Fahrzeugdiagnose erfüllt. Vorteilhaft kann der Server nur als Software ausgeführt oder ein Computer sein, auf dem eine Serversoftware läuft.

In einer weiteren vorteilhaften Ausgestaltung weist die Skripterzeugungseinrichtung eine Skripteingabeeinrichtung auf, welche zur Erstellung des Ausgangsskriptes ausgebildet ist. Vorzugsweise ist die Skripteingabeeinrichtung dabei als grafischer Editor ausgeführt. Es ist aber auch die Verwendung jedes anderen geeigneten Werkzeugs zur Softwareentwicklung denkbar.

Weiter vorteilhaft ist die Skripterzeugungseinrichtung dazu ausgebildet, zur Erzeugung der Testsequenzen Informationen aus einer Datenbank zu verwenden. Vorzugsweise handelt es dabei um Informationen, die in einer Beschreibungssprache, insbesondere in ODX, vorliegen. ODX (Open Diagnostic Data Exchange) stellt wesentliche Informationen (Anforderung und Dokumentation), die in der Fahrzeug- oder Steuergerätediagnose relevant sind, für die Software-Konfiguration zur Verfügung. Sie ist in der internationalen Norm ISO 22901-1 genormt.

Die vorkompilierten Testsequenzen sind bevorzugt eine Kombination aus OTX-Skripten und ODX-Steuergeräte-Diagnosedaten , wobei in ODX die Diagnosemöglichkeiten von Steuergeräten beschrieben werden. Bevorzugt werden die vorkompilierten Testsequenzen mit der Dateierweiterung ".ETX" (für Executable Test sequence exchange) bezeichnet. Diese Testsequenzen enthalten vorzugsweise alle notwendigen Informationen, um sie platformunabhängig ausführen zu können. Die Testsequenzen werden in einer Diagnoseeinheit im Fahrzeug oder in einer Testeinheit bevorzugt in größenreduzierte und platform-optimierte Runtime-Skripte bestehender Formate (z.B. LUA, Java, Python, Pearl, etc.) konvertiert.

Vorzugsweise ist außerdem eine Übertragungseinrichtung vorgesehen, welche zur Übertragung der Testsequenzen oder vorkompilierten Testsequenzen von der Skripterzeugungseinrichtung an den Server ausgebildet ist. Vorteilhaft sind dazu eine Sendeschnittstelle und eine korrespondierende Empfangsschnittstelle vorgesehen, wobei die Sendeschnittstelle mit der Skripterzeugungseinrichtung und die Empfangsschnittstelle mit dem Server verbunden ist und die Sendeschnittstelle so eingerichtet ist, dass sie Daten senden kann und die Empfangsschnittstelle so eingerichtet ist, dass sie von der Sendeschnittstelle gesendete Daten empfangen kann. Die Übertragung der Daten kann dabei sowohl analog, als auch digital (parallel oder seriell) erfolgen.

Weiterhin vorzugsweise erfolgt die Übermittlung der Kommunikation zwischen der Sendeschnittstelle und der Empfangsschnittstelle verschlüsselt, indem die Sendeschnittstelle und die Empfangsschnittstelle jeweils Mittel zum Verschlüsseln und/oder Entschlüsseln der Daten aufweisen. Neben der drahtlosen Übertragung der Daten (z. B. Funkübertragung, Infrarotkommunikation) sind grundsätzlich auch eine Glasfaser oder ein anderes Medium denkbar. Zur Verschlüsselung der Daten sind alle gängigen Verschlüsselungsmethoden geeignet.

In einer weiteren vorteilhaften Ausgestaltung ist eine Zuordnungseinrichtung vorgesehen, die dazu ausgebildet ist, den Testsequenzen oder den vorkompilierten Testsequenzen in Form von ETX Skripten den zumindest einen Ausführungsparameter zuzuordnen. Während die Testsequenzen vorzugsweise das Verhalten während der Skriptausführung, z.B. zu erfassende Fahrzeugdaten, deren Berechnungen und Auswertungen und ergebnisabhängig den weiteren Ablauf des Skriptes definieren, bestimmen die Ausführungsparameter bevorzugt unter welchen Bedingungen die Runtime-Skripte ausgeführt werden. Dies kann beispielsweise durch zeitliche Triggerung oder nach bestimmten Ereignissen im Fahrzeug erfolgen. Diese Ausführungsparameter sind vorteilhaft vom Skript separiert, um Fahrzeug- bzw. Flottenspezifische Skriptausführungsregeln zu ermöglichen.

Bevorzugt weist die Diagnoseeinrichtung eine Skriptausführungseinrichtung auf, welche dazu vorgesehen und eingerichtet ist, die Testsequenzen oder die vorkompilierten Testsequenzen in auszuführende Runtime Skripte zu konvertieren. Dabei kann es sich vorteilhaft um einen sogenannten "Skript Interpreter" also ein Computerprogramm handeln, das einen Programm-Quellcode einliest, analysiert und ausführt. Die Analyse des Quellcodes erfolgt also zur Laufzeit des Programms. Es ist aber auch jede andere Einrichtung denkbar, die auf jeder Rechnerarchitektur lauffähig ist. Selbstverständlich könnte auch eine Einrichtung zwischengeschaltet sein, welche als Assembler oder Compiler fungiert und die in eine auf dem System direkt ausführbare Datei umwandelt. Die Skriptausführungseinrichtung übernimmt die Konvertierung auf die jeweilige Platform.

Weiter vorteilhaft weist die Diagnoseeinrichtung eine Ausführungssteuereinrichtung auf, welche dazu vorgesehen und eingerichtet ist, den dem Runtime-Skript zugeordneten Ausführungsparameter auszuwerten und die Ausführung des Runtime-Skriptes entsprechend zu steuern. Dabei kann es sich vorteilhaft um einen sogenannten "Execution Scheduler", also ein Steuerprogramm handeln, welches die Ausführungsabfolge der Runtime-Skripte steuert. Dazu wertet die Ausführungssteuereinrichtung vorteilhaft die Ausführungsparameter aus und steuert die Skriptausführungseinrichtung gemäß den darin enthaltenen Informationen.

Der Server und die Diagnoseeinrichtung sind über ein Kommunikationsmittel miteinander verbunden. Bevorzugt handelt es sich dabei um eine Netzwerkverbindung, insbesondere das Internet. Vorteilhaft sind dabei erneut eine Sendeschnittstelle und eine korrespondierende Empfangsschnittstelle vorgesehen, wobei die Sendeschnittstelle mit dem Server und die Empfangsschnittstelle mit der Diagnoseeinrichtung verbunden ist und die Sendeschnittstelle so eingerichtet ist, dass sie Daten senden kann und die Empfangsschnittstelle so eingerichtet ist, dass sie von der Sendeschnittstelle gesendete Daten empfangen kann. Die Übertragung der Daten kann dabei wiederum sowohl analog, als auch digital (parallel oder seriell) erfolgen.
Weiterhin vorzugsweise erfolgt die Übermittlung der Kommunikation zwischen der Sendeschnittstelle und der Empfangsschnittstelle verschlüsselt, indem die Sendeschnittstelle und die Empfangsschnittstelle jeweils Mittel zum Verschlüsseln und/oder Entschlüsseln der Daten aufweisen. Neben der drahtlosen Übertragung der Daten (z. B. Funkübertragung, Infrarotkommunikation) sind grundsätzlich auch eine Glasfaser oder ein anderes Medium denkbar. Zur Verschlüsselung der Daten sind alle gängigen Verschlüsselungsmethoden geeignet.

Vorzugsweise handelt es sich bei dem Kommunikationsmittel um eine Mobilfunkverbindung. Vorteilhaft wird dabei der GSM-Standard, insbesondere der Telekommunikationsdienst "Short Message Service" (SMS) verwendet. Ebenso denkbar ist aber auch jede andere geeignete Mobilfunkverbindung, wie z. B. UMTS. In den USA können Kommunikationsmittel nach dem CDMA Standard (dem US Pendant zu GSM) eingesetzt werden. Neben SMS Nachrichten werden für größere Datenmengen die Datenpaket orientierten Formate GPRS, bzw. 1XRTT in den USA sowie zukünftig UMTS bzw HSxPA, LTE, usw. eingesetzt.

In einer weiteren vorteilhaften Ausgestaltung handelt es sich um ein Verfahren zur Diagnose einer Komponente in einem Fahrzeug insbesondere unter Verwendung eines Systems nach einem der Ansprüche 1 bis 9, wobei eine Testsequenz oder vorkompilierte Testsequenz mittels einer Skripteingabeeinrichtung erstellt wird, die Testsequenz oder vorkompilierte Testsequenz durch eine Übertragungseinrichtung an den Server übermittelt wird, der Testsequenz oder der vorkompilierten Testsequenz durch eine Zuordnungseinrichtung ein Ausführungsparameter zugeordnet wird, die Testsequenz oder vorkompilierte Testsequenz sowie der Ausführungsparameter durch eine Diagnoseeinrichtung von einem Server empfangen werden und die Diagnoseeinrichtung das Runtime-Skript erzeugt und entsprechend dem Ausführungsparameter ausführt.

Vorzugsweise ist die Skripteingabeeinrichtung dabei als grafischer Editor ausgeführt. Es ist aber auch die Verwendung jedes anderen geeigneten Werkzeugs zur Softwareentwicklung denkbar. Weiter vorteilhaft werden zur Erzeugung von vorkompilierten Testsequenzen in Form von ETX Skripten Informationen aus einer Datenbank verwendet. Vorzugsweise handelt es dabei um Informationen, die in einer Beschreibungssprache, insbesondere in ODX, vorliegen. ODX (Open Diagnostic Data Exchange) stellt wesentliche Informationen (Anforderung und Dokumentation), die in der Fahrzeug- oder Steuergerätediagnose relevant sind, für die Software-Konfiguration zur Verfügung. Sie ist in der internationalen Norm ISO 22901-1 genormt. Die ETX-Skripte sind bevorzugt eine Kombination aus OTX-Skripten und ODX-Steuergeräte-Diagnosedaten, wobei in ODX die Diagnosemöglichkeiten von Steuergeräten beschrieben werden. Auch für die OTX Skriptsprache gibt es einen Entwurf für eine ISO Norm (ISO 13209). Bevorzugt werden die ETX-Skripte mit der Dateierweiterung ".ETX" (für Executable Test sequence exchange) bezeichnet. Die OTX-oder ETX-Skripte enthalten vorzugsweise alle notwendigen Informationen, um sie platformunabhängig in einer Entwicklungsumgebung ausführen zu können. Die OTX-oder ETX-Skripte werden nach Übertragung in die Diagnoseeinheit bevorzugt in größenreduzierte und platform-optimierte Runtime-Skripte bestehender Formate (z.B. LUA, Java, Python, Pearl, etc.) konvertiert. Vorteilhaft sind zur Übertragung der Skripte an den Server eine Sendeschnittstelle und eine korrespondierende Empfangsschnittstelle vorgesehen, wobei die Sendeschnittstelle mit der Skripterzeugungseinrichtung und die Empfangsschnittstelle mit dem Server verbunden ist und die Sendeschnittstelle so eingerichtet ist, dass sie Daten senden kann und die Empfangsschnittstelle so eingerichtet ist, dass sie von der Sendeschnittstelle gesendete Daten empfangen kann. Die Übertragung der Daten kann dabei sowohl analog, als auch digital (parallel oder seriell) erfolgen. Weiterhin vorzugsweise erfolgt die Übermittlung der Kommunikation zwischen der Sendeschnittstelle und der Empfangsschnittstelle verschlüsselt, indem die Sendeschnittstelle und die Empfangsschnittstelle jeweils Mittel zum Verschlüsseln und/oder Entschlüsseln der Daten aufweisen. Neben der drahtlosen Übertragung der Daten (z. B. Funkübertragung, Infrarotkommunikation) sind grundsätzlich auch eine Glasfaser oder ein anderes Medium denkbar. Zur Verschlüsselung der Daten sind alle gängigen Verschlüsselungsmethoden geeignet. Während die Testsequenzen vorzugsweise das Verhalten während der Skriptausführung, z.B. zu erfassende Fahrzeugdaten, deren Berechnungen und Auswertungen und ergebnisabhängig den weiteren Ablauf des Skriptes definieren, bestimmen die Ausführungsparameter bevorzugt unter welchen Bedingungen die Runtime-Skripte ausgeführt werden. Dies kann beispielsweise durch zeitliche Triggerung oder nach bestimmten Ereignissen im Fahrzeug erfolgen. Diese Ausführungsparameter sind vorteilhaft vom Skript separiert, um Fahrzeug- bzw. Flottenspezifische Skriptausführungsregeln zu ermöglichen.

Zur Ausführung des Runtime-Skriptes weist die Diagnoseeinrichtung bevorzugt eine Skriptausführungseinrichtung sowie eine Ausführungssteuereinrichtung auf. Bei der Skriptausführungseinrichtung kann es sich vorteilhaft um einen sogenannten "Skript Interpreter" also ein Computerprogramm handeln, das einen Programm-Quellcode einliest, analysiert und ausführt. Die Analyse des Quellcodes erfolgt bevorzugt zur Laufzeit des Programms. Es ist aber auch eine andere Einrichtung denkbar, die auf jeder Rechnerarchitektur lauffähig ist. Selbstverständlich könnte auch eine weitere Einrichtung angeordnet sein, welche als Assembler oder Compiler fungiert und das Skript in eine auf dem System direkt ausführbare Datei umwandelt. Bei der Ausführungssteuereinrichtung kann es sich vorteilhaft um einen sogenannten "Execution Scheduler", also ein Steuerprogramm handeln, welches die Ausführungsabfolge der Runtime-Skripte steuert. Dazu werden vorteilhaft die Ausführungsparameter ausgewertet und die Skriptausführungseinrichtung gemäß den darin enthaltenen Informationen gesteuert. Auch der Server und die Diagnoseeinrichtung sind vorzugsweise über ein Kommunikationsmittel miteinander verbunden. Bevorzugt handelt es sich dabei um eine Netzwerkverbindung, insbesondere das Internet. Vorteilhaft werden die Daten über eine mit dem Server verbundene Sendeschnittstelle gesendet und über eine mit der Diagnoseeinrichtung verbundene korrespondierende Empfangsschnittstelle empfangen. Die Daten können dabei wiederum sowohl analog, als auch digital (parallel oder seriell) übertragen werden. Weiterhin vorzugsweise erfolgt die Übermittlung der Kommunikation zwischen der Sendeschnittstelle und der Empfangsschnittstelle verschlüsselt. Die Daten können vorteilhaft drahtlos (z. B. per Funk oder, Infrarot) oder per Glasfaser oder einem anderen Medium übertragen werden. Zur Verschlüsselung der Daten sind alle gängigen Verschlüsselungsmethoden geeignet. Vorzugsweise werden die Testsequenzen oder die ETX-Skripten sowie der Ausführungsparameter über eine Mobilfunkverbindung an übertragen. Vorteilhaft wird dabei der der GSM-Standard, insbesondere der Telekommunikationsdienst "Short Message Service" (SMS) verwendet. Ebenso denkbar ist aber auch jede andere geeignete Mobilfunkverbindung, wie z. B. Datenpaketdienste wie GPRS, 1XRTT,HSxPA oder UMTS.

Mit der Erfindung werden folgende Vorteile erzielt:
Die Menge der zu übertragenden Daten wird gegenüber bekannten XML-Skripten erheblich reduziert. Dies ist bei Mobilfunkübertragung entscheidend.

Die OTX und ETX Skripte können offboard-seitig platformunabhängig gestaltet werden. Die Konvertierung auf die Onboard-Platform im Fahrzeug oder im Testgerät übernimmt der Skriptkompilierer oder Skriptinterpreter.
Es können per remote Zugriff jederzeit speziell designte Diagnoseaufgaben auf die Telematikplatformen in Fahrzeugen oder auf die Testgeräte übertragen werden.

Um die Ausführungsregeln für die Testabläufe zu wandern, müssen lediglich per remote Zugriff die Ausführungsparameter aktualisiert werden. Die eigentlichen Testabläufe können auf der Telematikplatform unverändert verbleiben. Dies ermöglicht eine wesentliche Reduzierung der zu übertragenden Datenmenge, was wiederum bei der Mobilfunkübertragung entscheidend ist.

In der Firewall im Fahrzeug können erlaubte und nicht erlaubte Diagnosedienste bzw. CAN BUS Dienste definiert und damit eine Beeinträchtigung bzw. Manipulation des Fahrzeugs verhindert werden. Die Einstellungen der Firewall können weiterhin zur Grundlage von neuen Geschäftsmodellen, gemacht werden.

Im Folgenden wird die Erfindung anhand von Figuren näher erläutert. Dabei zeigen:
- Fig. 1: die schematische Übersicht einer bevorzugten Ausführungsform des Systems und
- Fig. 2: die schematische Darstellung einer beispielhaften Diagnoseeinrichtung

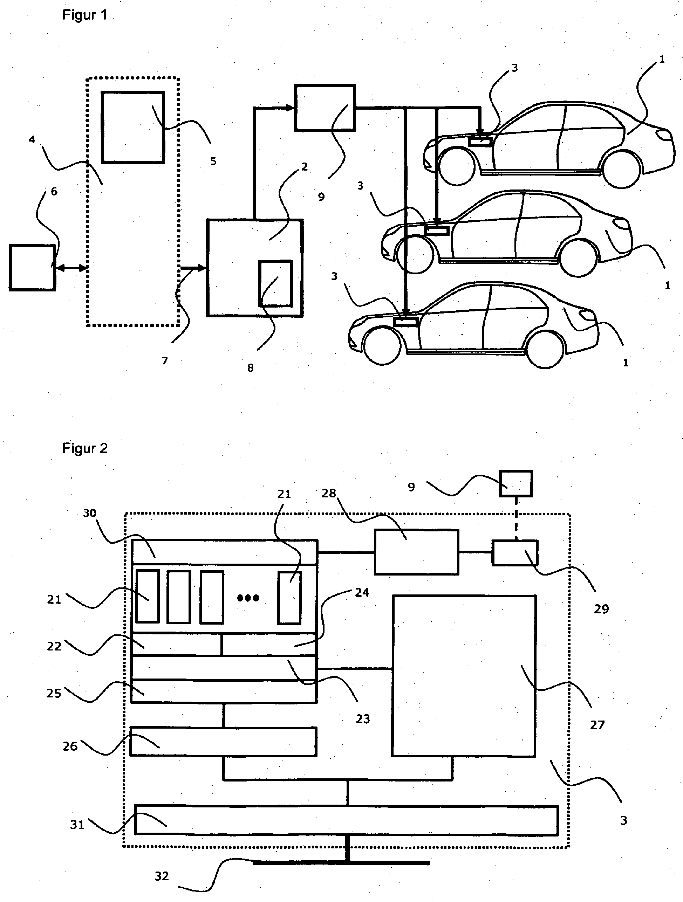

In Figur 1 ist schematisch eine bevorzugte Ausführungsform eines erfindungsgemäßen Systems dargestellt, deren zentrale Bestandteile Kraftfahrzeuge 1, ein Server 2, Diagnoseeinrichtungen 3, eine Skripterzeugungseinrichtung 4, eine Skripteingabeeinrichtung 5, eine Datenbank 6, eine Übertragungseinrichtung 7, eine Zuordnungseinrichtung 8, sowie ein Kommunikationsmittel 9 sind.

Die Skripteingabeeinrichtung 5 ist hier als Bestandteil der Skripterzeugungseinrichtung 4 dargestellt. Es ist jedoch ebenso möglich, dass Skripteingabeeinrichtung 5 und Skripterzeugungseinrichtung 4 getrennte Einrichtungen sind. Die Skripterzeugungseinrichtung 4 ist mit der Datenbank 6 und dem Server 2 verbunden. Es kann sich dabei um eine elektrische oder aber eine drahtlose oder eine sonstige Verbindung handeln. Die Zuordnungseinrichtung 8 ist hier als Bestandteil des Servers 2 angeordnet. Selbstverständlich ist es aber ebenso möglich, dass die Zuordnungseinrichtung 8 außerhalb des Servers 2 angeordnet ist. Dann müsste die Zuordnungseinrichtung 8 jedoch sowohl mit der Skripterzeugungseinrichtung 4, als auch mit dem Server verbunden sein. Auch bei diesen Verbindungen könnte es sich um elektrische, drahtlose oder sonstige Verbindungen handeln. Über das Kommunikationsmittel 9 ist der Server 2 mit den in den Fahrzeugen 1 angeordneten Diagnoseeinrichtungen verbunden. Diese Verbindung kann wiederum als elektrische, drahtlose oder sonstige Verbindung ausgeführt sein.

Vorzugsweise ist die Skripteingabeeinrichtung 5 als grafischer Editor ausgeführt. Weiter vorteilhaft werden zur Erzeugung der Testsequenzen oder der vorkompilierten Testsequenzen 21 Informationen aus einer Datenbank 6 verwendet. Unter Datenbank 6 wird dabei vorliegend ein sogenanntes Datenbanksystem verstanden, welches aus einem Datenbankmanagementsystem und den zu verwaltenden Daten besteht. Bei den Daten handelt es sich vorzugsweise um Informationen, die in einer Beschreibungssprache, insbesondere in ODX, vorliegen. Aus dem mit Hilfe der Skripteingabeeinrichtung 5 erstellten Ausgangsskript wird durch die Skripterzeugungseinrichtung 4 ein platformunabhängiges Skript erstellt. Dieses Skript ist bevorzugt eine Kombination aus einem OTX-Skript und ODX-Steuergeräte-Diagnosedaten. Diese Testsequenzen oder vorkompilierten Testsequenzen, je nach Ausführungsform, 21 werden dann an den Server 2 übertragen. Die Übertragung der Daten kann dabei sowohl analog, als auch digital (parallel oder seriell) erfolgen. Neben der drahtlosen Übertragung der Daten (z. B. Funkübertragung, Infrarotkommunikation) sind grundsätzlich auch eine Glasfaser oder ein anderes Medium denkbar. Durch die Zuordnungseinrichtung 8 wird den Testsequenzen oder vorkompilierten Testsequenzen 21 dann mindestens ein Ausführungsparameter zugeordnet. Dieser bestimmt bevorzugt unter welchen Bedingungen die jeweiligen Testsequenzen durch die Diagnoseeinrichtungen 3 ausgeführt werden soll. Die Ausführungsparameter sind vorteilhaft vom Skript separiert, um Fahrzeug- bzw. Flottenspezifische Skriptausführungsregeln zu ermöglichen.

Über die Zuordnungseinrichtung können Testsequenzen einem einzelnen oder mehreren Fahrzeugen zugeordnet werden. Auch ist die Zuordnung zu einer einzelnen Flotte von Fahrzeugen oder zu mehreren Flotten von Fahrzeugen möglich. Die Zuordnung erfolgt beispielsweise anhand einer Kennung. Ebenso können über die Zuordnungseinrichtung abhängig von dem oder den Zielfahrzeugen, dem oder den Zielflotten den letztendlichen Runtime Skripten unterschiedliche Ausführungsparameter zugeordnet werden.

Die Festlegung und Auswahl der jeweiligen Fahrzeuge oder Flotten erfolgt über eine Steuerungslogik im Server. Die Steuerungslogik bezieht die Auswahlkriterien aus einer Datenbank (6) möglichst in Verbindung mit einer manuellen Input/Output Schnittstelle. In der Datenbank werden die Konfigurationsstände der Fahrzeuge dokumentiert und die für die jeweiligen Konfigurationsstände notwendigen Testsequenzen und Ausführungsparameter vorgehalten und verwaltet.

Zur Ausführung der Testsequenzen oder der vorkompilierten Testsequenzen weist die Diagnoseeinrichtung bevorzugt eine Skriptausführungseinrichtung 22 sowie eine Ausführungssteuereinrichtung 23 auf. Bei der Skriptausführungseinrichtung 22 kann es sich vorteilhaft um einen sogenannten "Skript Interpreter" also ein Computerprogramm handeln, das einen Programm-Quellcode einliest, analysiert und ausführt. Bei der die Ausführungssteuereinrichtung 23 kann es sich vorteilhaft um einen sogenannten "Execution Scheduler", also ein Steuerprogramm handeln, welches die Ausführungsabfolge der Runtime-Skripte steuert. Bei dem Kommunikationsmittel 9 handelt es sich bevorzugt um eine Netzwerkverbindung, insbesondere das Internet. Vorzugsweise werden Testsequenzen oder vorkompilierte Testsequenzen 21 sowie der mindestens eine Ausführungsparameter über eine Mobilfunkverbindung an die Diagnoseeinrichtungen 3 übertragen. In Figur 2 ist schematisch ein Beispiel für eine Diagnoseeinrichtung 3 dargestellt, deren zentrale Bestandteile eine Reihe von Testsequenzen oder ETX Skripten 21, eine Skriptausführungseinrichtung 22, eine Ausführungssteuereinrichtung 23, eine Programmierschnittstelle 24, eine Laufzeitumgebung 25, eine Firewall 26, eine weitere Anwendung 27, eine Verbindungskontrolleinrichtung 28, einen Netzwerkadapter 29, eine Übertragungssteuerung 30, einen CAN-Treiber 31, ein CAN-Bus 32 sowie ein Kommunikationsmittel 9 sind.

Über den CAN-Bus 32 ist die Diagnoseeinrichtung 3 mit den Sensoren verbunden. Statt eines CAN-Busses 32 kann auch ein anderes geeignetes Bussystem verwendet werden.

Die Laufzeitumgebung 25 wird gemeinsam mit dem Runtime-Skript, welches nicht direkt mit dem Betriebssystem kommunizieren kann, ausgeführt und macht es lauffähig, indem es zwischen Runtime-Skript und Betriebssystem vermittelt.

Nachdem eine Testsequenz oder eine vorkompilierte Testsequenz 21 über das Kommunikationsmittel 9 und den Netzwerkadapter 29 empfangen wurde, wird es durch die Skriptausführungseinrichtung 22 ausgeführt. Genauer: Das Skript wird zunächst gespeichert, so dass es zu späteren Zeitpunkten ausgeführt werden kann. Alternativ kann auch eine sofortige oder zeitnahe Ausführung erfolgen. Bei der Skriptausführungseinrichtung 22 kann es sich vorteilhaft um einen sogenannten "Skript Interpreter" also ein Computerprogramm handeln, das einen Programm-Quellcode einliest, analysiert und ausführt. Vorzugsweise ist die Skriptausführungseinrichtung ein Skriptkompiler, der die OTX-Testsequenzen oder die ETX Skripte in das Diagnosezielformat, z.B. LUA, Java, Python. Pearl etc, das im jeweiligen Fahrzeug zur Anwendung kommt, umwandelt.

Bei der Ausführungssteuereinrichtung 23 kann es sich vorteilhaft um einen sogenannten "Execution Scheduler", also ein Steuerprogramm handeln, welches die Ausführungsabfolge der Runtime-Skripte steuert. Dazu werden vorteilhaft die Ausführungsparameter ausgewertet und die Skriptausführungseinrichtung 22 gemäß den darin enthaltenen Informationen gesteuert. Die Ausführungsparameter sind hier nicht dargestellt.

Die Steuerung der Skriptausführungseinrichtung 22 ist notwendig, da z. B. ein zu diagnostizierendes reales Steuergerät zusätzliche virtuelle Steuergeräte enthalten kann. Diese können untereinander und mit dem realen Steuergerät nicht problemlos zeitgleich diagnostiziert werden. Eine Erkennung der zusammengehörenden realen und virtuellen Steuergeräte ist beispielsweise mit ODX nicht möglich. Um Interferenzen zwischen zwei Skriptausführungen auszuschließen, soll die Diagnoseeinrichtung 3 bevorzugt immer nur ein Runtime-Skript zeitgleich ausführen. Dies ist insbesondere relevant, wenn zwei Runtime-Skripte auf die gleichen (realen oder virtuellen) Steuergeräte zugreifen. Durch die jeweiligen Ausführungsparameter sind den einzelnen Runtime-Skripten unterschiedliche Prioritäten zugeordnet. Die Ausführungssteuereinrichtung 23 stellt die sequentielle Ausführung der Runtime-Skripte basierend auf ihrer Ausführungspriorität sicher.

Dabei ist zu beachten, dass es neben den Ausführungsparametern auch Übertragungsparameter gibt, welche die Bedingungen für die Übertragung der Skriptausführungsergebnisse und die Übertragungsbedingungen der Runtime Skripte regeln. Für die Übertragung der Skriptausführungsergebnisse ist analog zum Execution Scheduler ein Transmission Scheduler vorgesehen, der die Übertragung der Ergebnisse an den Server steuert.
In der Firewall 26 können erlaubte und nicht erlaubte Diagnosedienste bzw. CAN-Bus 32 Dienste definiert werden. Da die Firewall 26 nicht ferngesteuert beeinflusst werden kann, können für Diagnoseanbieter lediglich freigegebene Diagnosedienste zugelassen werden.

Die Übertragung der Skriptausführungsergebnisse erfolgt ebenfalls sequentiell, da nur ein Kommunikationsmittel 9 und somit nur ein Datenkanal zur Verfügung steht (z. B. der Mobilfunkkanal). Die Übertragungssteuerung 30 stellt die priorisierte Übertragung der Ergebnisse sicher. Im übrigen erfolgt die Übertragung der Skriptausführungsergebnisse von der Diagnoseeinrichtung an einen Server bevorzugt über eine Mobilfunkverbindung ist verschlüsselt und erfolgt analog zur Übertragung der Ausführungsparameter.

Neben den lokalen (d.h. auf der Diagnoseeinheit befindlichen) Regeln zur Skriptausführung und Ergebnisübertragung (basierend auf den Ausführungs- und Übertragungsparametern) ist es auch möglich, dass über eine geeignete Eingabeeinheit auf dem Server Skriptausführungs- und/oder Ergebnisübertragungsanfragen vom Server an eine Diagnoseeinheit geschickt wird. Diese Anfragen können an ein Einzelfahrzeug oder eine Auswahl (Flotte) von Fahrzeugen geschickt werden (dafür kann eine Zuordnungseinrichtung (8) verwendet werden). Es wird wieder eine drahtlose bzw. Mobilfunkverbindung sowie ggf (aber nicht zwangsweise) eine Verschlüsselung verwendet. Nach dem Empfang einer solchen Anfrage vom Server wird auf der Diagnoseeinrichtung die Skriptausführung durch den "Execution Scheduler" mit einer zuvor festgelegten Priorität sichergestellt. Die Ergebnisübertragung wird durch den "Transmission Scheduler" ebenfalls mit einer zuvor festgelegten Priorität sichergestellt.

## Patentansprüche

1. System zur Diagnose einer Komponente eines Fahrzeugs (1), wobei das System umfasst:
- einen Server (2) der dazu eingerichtet und ausgeführt ist, zumindest eine Testsequenz (21) zur Diagnose der Komponente, und zumindest einen der Testsequenz (21) zugeordneten Ausführungsparameter bereit zu stellen, und
- eine Diagnoseeinrichtung (3), die dazu eingerichtet und ausgeführt ist, die Testsequenz sowie den Ausführungsparameter zu empfangen,
wobei der Server (2) und die Diagnosevorrichtung (3) derart ausgeführt und eingerichtet sind, dass die Testsequenz (21) vom Server (2) an die Diagnoseeinrichtung (3) übertragen und dort vorimplementiert wird, die Übertragung des Ausführungsparameters vom Server (2) an die Diagnoseeinrichtung (3) getrennt und nachfolgend zur Testsequenz (21) erfolgt, und eine Skriptausführungseinheit (22) der Diagnosevorrichtung (3) die Testsequenz (21) entsprechend dem empfangenen Ausführungsparameter ausführt.

2. System gemäß Anspruch 1,
**dadurch gekennzeichnet, dass**
die bereitgestellte Testsequenz (21) vorkompiliert ist.

3. System gemäß Anspruch 1 oder 2,
**dadurch gekennzeichnet, dass**
die Diagnoseeinrichtung (3) im Fahrzeug (1) angeordnet ist.

4. System gemäß einem der Ansprüche 1 bis 3,
**dadurch gekennzeichnet, dass**
der Server (2) Fahrzeug-extern angeordnet ist.

5. System gemäß einem der Ansprüche 1 bis 4,
**dadurch gekennzeichnet, dass**
das System eine Skripterzeugungseinrichtung (4) mit einer Skripteingabeeinrichtung (5) umfasst, wobei die Skripterzeugungseinrichtung (4) zur Erstellung der Testsequenz (21) auf Basis eines OTX-Ausgangsskriptes ausgebildet und eingerichtet ist.

6. System gemäß einem der Ansprüche 1 bis 5,
**dadurch gekennzeichnet, dass**
die Testsequenz (21) ein OTX-Skript oder ein ETX-Skript ist.

7. System gemäß einem der Ansprüche 1 bis 6,
**dadurch gekennzeichnet, dass**
das System eine Zuordnungseinrichtung (8) umfasst, die dazu eingerichtet und ausgeführt ist, der Testsequenz (21) den Ausführungsparameterzuzuordnen.

8. System gemäß einem der Ansprüche 1 bis 7,
**dadurch gekennzeichnet, dass**
die Diagnoseeinrichtung (3) die Skriptausführungseinrichtung (22) aufweist, welche als Skriptinterpreter oder als Skriptkompiler ausgebildet ist und aus der Testsequenz (21) ein Plattform angepasstes Runtime-Skript erzeugt.

9. System gemäß Anspruch 8,
**dadurch gekennzeichnet, dass**
die Diagnoseeinrichtung (3) eine Ausführungssteuereinrichtung (23) aufweist, welche dazu eingerichtet und ausgeführt ist, den dem Runtime-Skript zugeordneten Ausführungsparameter auszuwerten und die Ausführung des Runtime-Skriptes entsprechend zu steuern.

10. System gemäß einem der Ansprüche 1 bis 9,
**dadurch gekennzeichnet, dass**
der Server (2) und die Diagnoseeinrichtung (3) über ein Kommunikationsmittel (9) miteinander verbunden sind.

11. System gemäß Anspruch 10,
**dadurch gekennzeichnet, dass**
es sich bei dem Kommunikationsmittel (9) um eine Mobilfunkverbindung, eine Satellitenverbindung oder eine andere drahtlose Kommunikationsverbindung handelt.

12. System nach einem der Ansprüche 1 bis 11,
**dadurch gekennzeichnet, dass**
die Diagnoseeinrichtung (3) in einer Telematikplattform des Fahrzeugs (1) oder in einem mobilen Testgerät implementiert ist.

13. Verfahren zur Diagnose einer Komponente eines Fahrzeugs (1), insbesondere unter Verwendung eines Systems nach einem der Ansprüche 1 bis 12, aufweisend die Schritte:
- ein oder mehrere Testsequenzen werden mittels einer Skripteingabeeinrichtung (5) erstellt,
- die Testsequenzen werden durch eine Übertragungseinrichtung (7) an einen Server (2) übermittelt,
- der Server (2) übermittelt an eine Diagnoseeinrichtung (3) die Testsequenzen, die dort vorimplementiert werden,
- der Server (2) übermittelt an die Diagnoseeinrichtung (3) getrennt und nachfolgend zu den Testsequenzen zumindest einen Ausführungsparameter,
- eine Testsequenz (21) der Testsequenzen wird durch eine Zuordnungseinrichtung (8) dem empfangenen Ausführungsparameter zugeordnet,
- die Diagnoseeinrichtung (3) führt die Testsequenz (21) entsprechend dem Ausführungsparameter aus.

14. Verfahren gemäß Anspruch 13,
**dadurch gekennzeichnet, dass**
die übermittelte/n Testsequenz/en vorkompiliert ist/sind, die mittels einer Skripterzeugungseinrichtung (4) erzeugt wird/werden.

15. Verfahren nach Anspruch 13 oder 14,
**dadurch gekennzeichnet, dass**
nach Ausführung der Testsequenz (21) die Skriptausführungsergebnisse an den Server (2) übertragen werden.

## Claims

1. System for diagnosis of a component of a motor vehicle (1), wherein the system comprises:
- a server (2) which is configured to provide at least one test sequence (21) for diagnosis of the component and at least one execution parameter allocated to the test sequence (21), and
- a diagnostic device (3) which is configured to receive the test sequence and the execution parameter,
wherein the server (2) and the diagnostic device (3) are configured such that the test sequence (21) is transmitted by the server (2) to the diagnostic device (3) and pre-implemented there, the transmission of the execution parameter from the server (2) to the diagnostic device (3) is carried out separately and following the test sequence (21), and a script execution unit (22) of the diagnostic device (3) executes the test sequence (21) corresponding to the execution parameter received.

2. System according to claim 1,
**characterised in that**
the test sequence (21) provided is pre-compiled.

3. System according to claim 1 or 2,
**characterised in that**
the diagnostic device (3) is arranged in the motor vehicle (1).

4. System according to one of claims 1 to 3,
**characterised in that**
the server (2) is arranged outside of the vehicle.

5. System according to one of claims 1 to 4,
**characterised in that**
the system comprises a script generation device (4) with a script input device (5), wherein the scrip generation device (4) is configured to create the test sequence (21) on the basis of an OTX starting script.

6. System according to one of claims 1 to 5,
**characterised in that**
the test sequence (21) is an OTX script or an ETX script.

7. System according to one of claims 1 to 6,
**characterised in that**
the system comprises an allocation device (8) which is configured to allocate the execution parameter to the test sequence (21).

8. System according to one of claims 1 to 7,
**characterised in that**
the diagnostic device (3) has the script execution device (22) which is designed as a script interpreter or as a script compiler and generates from the test sequence (21) a platform-adapted runtime script.

9. System according to claim 8,
**characterised in that**
the diagnostic device (3) has an execution control device (23) which is configured to evaluate the execution parameter allocated to the runtime script and to control the execution of the runtime script accordingly.

10. System according to one of claims 1 to 9,
**characterised in that**
the server (2) and the diagnostic device (3) are interconnected via a communications means (9).

11. System according to claim 10,
**characterised in that**
the communications means (9) is a mobile radio connection, a satellite connection or another wireless communications connection.

12. System according to one of claims 1 to 11,
**characterised in that**
the diagnostic device (3) is implemented in a telematics platform of the motor vehicle (1) or in a mobile test unit.

13. Method for diagnosis of a component of a motor vehicle (1), in particular using a system according to one of claims 1 to 12, having the steps:
- one or more test sequences is / are created by means of a script input device (5),
- the test sequences are transmitted by a transmission device (7) to a server (2),
- the server (2) transmits to a diagnostic device (3) the test sequences which are pre-implemented there,
- the server (2) transmits at least one execution parameter to the diagnostic device (3) separately and after the test sequences,
- one test sequence (21) of the test sequences is allocated by an allocation device (8) to the execution parameter received,
- the diagnostic device (3) executes the test sequence (21) according to the execution parameter.

14. Method according to claim 13,
**characterised in that**
the transmitted test sequence(s), which is / are generated by means of a script generation device (4), is / are precompiled.

15. Method according to claim 13 or 14,
**characterised in that**
after execution of the test sequence (21) the script execution results are transmitted to the server (2).

## Revendications

1. Système de diagnostic d'un composant d'un véhicule automobile (1), le système comprenant :
- un serveur (2) qui est installé et conçu pour fournir au moins une séquence d'essai (21) destinée au diagnostic du composant, et au moins l'un paramètre d'exécution attribué à la séquence d'essai (21), et
- un dispositif de diagnostic (3) qui est installé et conçu pour recevoir la séquence d'essai ainsi que les paramètres d'exécution,
le serveur (2) et le dispositif de diagnostic (3) étant conçus et installés de telle sorte que la séquence d'essai (21) soit transmise à partir du serveur (2) au dispositif de diagnostic (3) où elle est pré-implémentée, la transmission du paramètre d'exécution s'effectue séparément à partir du serveur (2) au dispositif de diagnostic (3) et consécutivement vers la séquence d'essai (21), et une unité d'exécution de script (22) du dispositif de diagnostic (3) exécute la séquence d'essai (21) conformément au paramètre d'exécution reçu.

2. Système selon la revendication 1, **caractérisé en ce que** la séquence d'essai (21) fournie est précompilée.

3. Système selon la revendication 1 ou la revendication 2, **caractérisé en ce que** le dispositif de diagnostic (3) est disposé dans le véhicule automobile (1).

4. Système selon l'une quelconque des revendications 1 à 3, **caractérisé en ce que** le serveur (2) est disposé à l'extérieur du véhicule automobile.

5. Système selon l'une quelconque des revendications 1 à 4, **caractérisé en ce que** le système comprenant un dispositif de production de script (4) doté d'un dispositif d'entrée de script (5), le dispositif de production de script (4) est installé et conçu pour produire la séquence d'essai (21) en fonction d'un script de sortie OTX.

6. Système selon l'une quelconque des revendications 1 à 5, **caractérisé en ce que** la séquence d'essai (21) est un script OTX ou un script ETX.

7. Système selon l'une quelconque des revendications 1 à 6, **caractérisé en ce que** le système comprenant un dispositif d'attribution (8) qui est installé et conçu pour attribuer les paramètres d'exécution à la séquence d'essai (21).

8. Système selon l'une quelconque des revendications 1 à 7, **caractérisé en ce que** le dispositif de diagnostic (3) présente le dispositif d'exécution de script (22) qui est conçu en tant qu'interprète de script ou en tant que compilateur de script et produit à partir de la séquence d'essai (21) un script d'instant d'exécution adapté à une plateforme.

9. Système selon la revendication 6, **caractérisé en ce que** le dispositif de diagnostic (3) présente un dispositif de commande d'exécution (23) qui est installé et conçu pour évaluer les paramètres d'exécution attribués au script d'instant d'exécution et pour commander l'exécution du script d'instant d'exécution.

10. Système selon l'une quelconque des revendications 1 à 9, **caractérisé en ce que** le serveur (2) et le dispositif de diagnostic (3) sont reliés l'un à l'autre par l'intermédiaire d'un moyen de communication (9).

11. Système selon la revendication 10, **caractérisé en ce que** le moyen de communication (9) est une liaison radio mobile, une liaison par satellite ou une autre liaison de communication sans fil.

12. Système selon l'une quelconque des revendications 1 à 11, **caractérisé en ce que** le dispositif de diagnostic (3) est implémenté dans une plateforme télématique du véhicule automobile (1) ou dans un appareil d'essai mobile.

13. Procédé de diagnostic d'un composant d'un véhicule automobile (1), en particulier à l'aide d'un système selon l'une quelconque des revendications 1 à 12, présentant les étapes suivantes :
- une ou plusieurs séquences d'essai sont produites à l'aide d'un dispositif d'entrée de script (5),
- les séquences d'essai sont transmises par l'intermédiaire du dispositif de transmission (7) à un serveur (2),
- le serveur (2) transmet au dispositif de diagnostic (3) les séquences d'essai qui sont préimplantées,
- le serveur (2) transmet au dispositif de diagnostic (3) séparément et consécutivement aux séquences d'essai au moins un paramètre d'exécution,
- une séquence d'essai (21) parmi les séquences d'essai est attribuée par l'intermédiaire d'un dispositif d'attribution (8) au paramètre d'exécution reçu,
- le dispositif de diagnostic (3) exécute la séquence d'essai (21) conformément au paramètre d'exécution.

14. Procédé selon la revendication 13, **caractérisé en ce que** la/les séquences d'essai transmise(s), qui est/sont produite(s) au moyen d'un dispositif de production de script (4), est/sont précompilées.

15. Procédé selon la revendication 13 ou la revendication 14, **caractérisé en ce qu'**après l'exécution de la séquence d'essai (21), les résultats d'exécution de script sont transmis au serveur (2).
